# FASCICULE DE BREVET EUROPEEN

(11) **EP 2 100 360 B1**
(45) Date de publication et mention de la délivrance du brevet: **12.01.2011**
(21) Numéro de dépôt: 07848959.8
(22) Date de dépôt: 27.11.2007
(51) Int. Cl.: H02K 3/493

(54) **STATOR DE MACHINE ELECTRIQUE TUBULAIRE**
RÖHRENFÖRMIGER STATOR EINER ELEKTRISCHEN MASCHINE
TUBULAR ELECTRICAL MACHINE STATOR

(30) Priorité: 30.11.2006 FR 0610467
(43) Date de publication de la demande: 16.09.2009
(73) Titulaire: Somfy SAS, 74300 Cluses (FR)
(72) Inventeur: MARTIN-COCHER, Didier, 74460 Marnaz (FR)
(74) Mandataire: Bugnion Genève
(86) Numéro de dépôt international: PCT/IB2007/003692
(87) Numéro de publication internationale: WO 2008/065521

(56) Documents cités:
- EP-A- 0 963 028
- DE-A1- 10 209 762
- FR-A- 2 116 827
- JP-A- 60 002 038

## Description

L'invention se rapporte au domaine des moteurs tubulaires avec stator bobiné. L'invention s'applique préférentiellement à des moteurs de type asynchrone (moteurs à induction), mais elle peut également s'appliquer à des moteurs de type synchrone ou de type pas-à-pas.

Les moteurs sont dits tubulaires lorsque leur longueur est supérieure au diamètre, et plus précisément lorsque, en absence de bobinages, la hauteur du stator (mesurée selon l'axe du moteur) est supérieure à son diamètre extérieur.

Un problème posé par la réalisation de tels moteurs est le bobinage des stators. Le stator se présente sous forme d'un empilement de tôles, souvent maintenues par agrafage mutuel, ces tôles étant évidées en leur partie centrale pour laisser place au rotor, et des évidements supplémentaires ouverts vers le rotor étant ménagés pour loger les conducteurs donnant naissance au flux stator. Deux évidements supplémentaires consécutifs, ou encoches consécutives, délimitent une dent stator. Un stator comporte par exemple 12 dents et 12 encoches. Le flux magnétique créé par les conducteurs circule principalement du stator vers le rotor au travers des dents statoriques.

Le bobinage est réalisé sous forme de spires multiples, chaque spire comportant deux conducteurs actifs magnétiquement, logés dans deux des encoches, raccordés à l'extérieur du stator par une liaison inactive magnétiquement. L'ensemble des raccordements effectués sur une même extrémité de stator constitue un chignon. C'est le même fil conducteur, en cuivre émaillé, qui est utilisé pour réaliser l'ensemble des spires d'une même phase. Une même spire inclut une pluralité de dents, ce qui conduit à une complexité de bobinage sans rapport avec le cas simple où chaque bobine est bobinée autour d'une même dent stator.

Cette disposition oblige à réaliser le bobinage depuis l'intérieur, ce qui est très délicat en particulier lorsque le moteur est de type tubulaire. Dans ce cas, les bobines de chaque phase sont préparées à l'avance et introduites par insertion dans le stator. Une telle opération nécessite une durée importante en comparaison des techniques de bobinage dites « Flyer », par fil volant, couramment utilisées pour le bobinage automatisé de structures inversées, comme par exemple les rotors de moteurs universels.

Il a été depuis longtemps imaginé d'inverser la structure des stators bobinés, afin de permettre leur bobinage par l'extérieur. Le brevet US 5,705,874 décrit une solution de déformation du stator après bobinage, permettant un bon coefficient de remplissage des encoches et permettant de limiter les dimensions des entrefers s'opposant à la circulation du flux d'une dent stator vers les autres dents stators.

Cependant, la limitation des entrefers reste imparfaite. Il est de plus connu qu'une déformation importante des tôles détériore leurs caractéristiques magnétiques, en réduisant leur perméabilité.

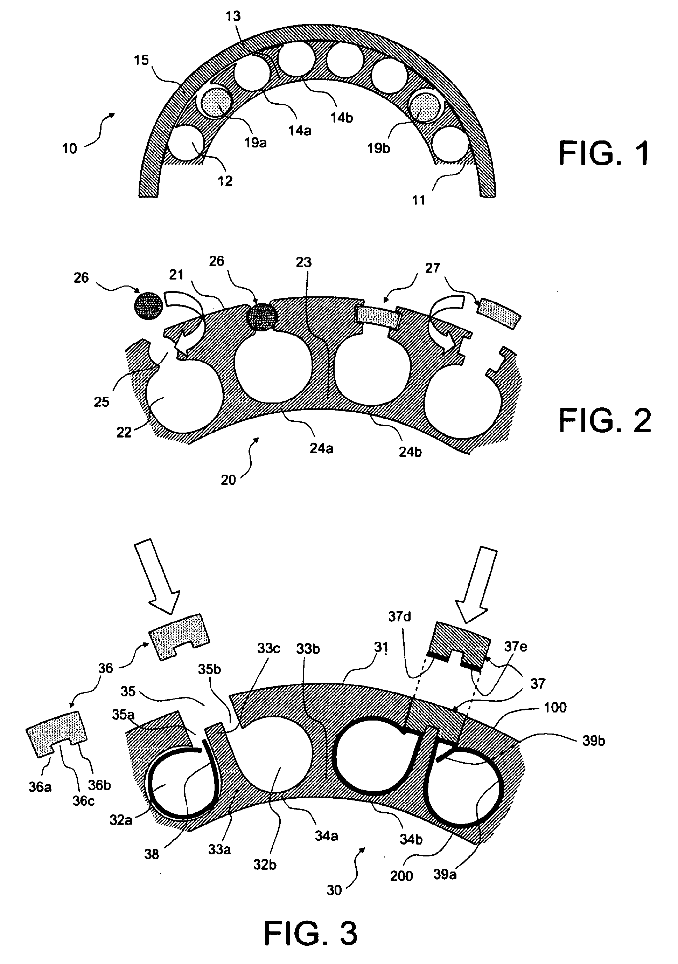

Dans la demande de brevet JP 63-224637, des espaces pratiqués dans la carcasse du stator permettent le bobinage par l'extérieur. Un tube ferromagnétique muni de reliefs est monté sur la carcasse après bobinage, les reliefs venant combler les espaces (figure 2). La carcasse réalisée par empilement de tôles est donc chassée dans le tube. Le nombre élevé de reliefs augmente les efforts de chassage et la détérioration des caractéristiques magnétiques des tôles. En outre, les reliefs sont nécessairement massifs et donc le siège de courants induits néfastes.

Dans le brevet US 6,933,649, une cale ferromagnétique 9 est insérée dans un stator bobiné par l'intérieur dans une position dépliée, puis replié sur lui-même avant insertion dans un tube.

On connaît en outre du brevet US 6,744,168 un stator présentant des dents magnétiques qui sont, à l'origine, mécaniquement et magnétiquement indépendantes les unes des autres. Ces dents sont disposées à distance les unes des autres lors de la fabrication du stator et des cales magnétiques sont insérées depuis l'extérieur entre les dents après bobinage du stator. Un tel stator, dont le but est d'améliorer le processus de mise en place de feuilles d'isolation des bobinages, est compliqué à réaliser dans la mesure où il nécessite des moyens pour disposer dans l'espace les dents les unes par rapport aux autres. Plus la hauteur du stator est élevée, plus cette disposition devient problématique.

De même, de nombreux autres documents de l'état de la technique comme la demande de brevet JP 2001-136687, prévoient des dents indépendantes et ne sont applicables qu'au cas où chaque bobine est réalisée autour d'une même dent stator.

Enfin, le brevet FR 2 116 827 décrit un stator de moteur asynchrone comprenant des barrettes réalisées en un métal à caractéristiques magnétiques élevées, ces barrettes étant profilées de façon à être mises en place dans le débouché des encoches par coulissement longitudinal. Or il apparaît qu'une telle disposition réduit de manière significative le passage extérieur du flux magnétique, en apportant une restriction géométrique à la section traversée par ce flux, et conduit à des saturations locales et/ou entrefers parasites importants.

Le brevet DE 102 09 752 décrit un stator de machine électrique permettant le bobinage par l'extérieur comprenant une carcasse munie d'évidements longitudinaux destinés à recevoir des bobinages et des canaux longitudinaux débouchant dans deux évidements consécutifs.

Le but de l'invention est de proposer un stator de machine électrique obviant aux inconvénients mentionnés plus haut. En particulier, l'invention propose une structure de stator avec entrefers parasites réduits au minimum, mais réalisée sans déformation importante, sans dégradation magnétique des tôles provoquée chassage axial, laissant un espace suffisant pour un bobinage rapide et sans qu'il soit nécessaire de recourir à un positionnement ou guidage de grande précision. L'invention présente en outre l'avantage de faire coopérer activement l'isolation supplémentaire requise par les normes au processus de bobinage, en améliorant de fait la qualité de celui-ci. L'invention propose également un procédé de réalisation d'un tel stator.

Le stator selon l'invention est défini par la revendication 1.

Différents modes de réalisation sont définis par les revendications dépendantes 2 à 7.

Le procédé de fabrication de stator selon l'invention est défini par la revendication 8.

Le dessin annexé représente, à titre d'exemples, différentes variantes d'un mode de réalisation d'un stator selon l'invention.
La figure 1 représente en coupe une structure typique de stator à bobinage par l'extérieur.
La figure 2 représente en coupe un stator selon l'art antérieur.
La figure 3 représente en coupe un mode de réalisation d'un stator selon l'invention.
La figure 4A représente en coupe une première variante du mode de réalisation d'un stator selon l'invention.
La figure 4B représente en vue de côté la première variante du mode de réalisation d'un stator selon l'invention.
La figure 5 représente en coupe une deuxième variante du mode de réalisation d'un stator selon l'invention.
La figure 6 représente en coupe une troisième variante du mode de réalisation d'un stator selon l'invention.

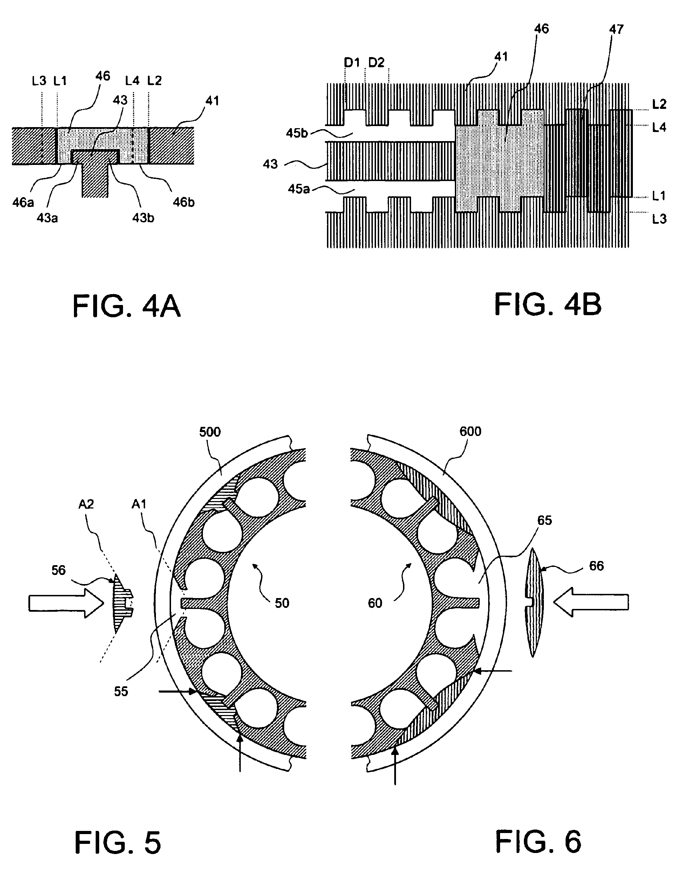

Dans toutes les figures, sauf la figure 4B, le plan de coupe est parallèle au plan principal d'une tôle stator.

Le stator représenté en figure 1 est connu de l'art antérieur. Ce stator 10 comprend une partie intérieure 11, réalisée en matériau ferromagnétique doux, dans laquelle des évidements 12, par exemple de forme circulaire, ont été répartis. Une dent stator 13 est définie par l'espace entre deux évidements consécutifs. On s'efforce d'avoir aussi peu de matière ferromagnétique que possible entre deux dents stators consécutives. Autrement dit, les isthmes 14a, 14b, de raccordement intérieur d'une dent stator 13 aux dents voisines sont aussi étroits que le permet la cohérence mécanique de la partie intérieure 11. Ainsi, le flux passant à travers la dent stator 13, se dirigera principalement vers le rotor (non représenté) plutôt que vers les dents voisines. Les évidements 12 ont préférentiellement une section ovoïde plutôt que circulaire.

Chaque évidement est ouvert à la périphérie de la partie intérieure. La partie intérieure 11 est donc bobinable depuis l'extérieur. On a représenté les sections 19a et 19b d'un même bobinage comportant de nombreuses spires emplissant des évidements distants.

Chaque spire est donc logée dans des évidements non consécutifs.

Une culasse 15 ferme la partie intérieure une fois celle-ci bobinée. La culasse 15 assure la circulation extérieure du flux magnétique d'une dent stator vers d'autres dents stators, magnétiquement opposées à un instant donné.

Si on ne tient pas compte des isthmes, et si on remplace ceux-ci par de l'air (ce qui est équivalent magnétiquement dès que le matériau est saturé), on constate que le stator terminé est équivalent à un stator classique, dont les encoches sont ouvertes vers l'intérieur. La performance n'est véritablement équivalente que pour autant que les entrefers parasites entre culasse 15 et partie intérieure soient aussi réduits que possible.

La figure 2 représente un premier mode de réalisation d'un stator selon le brevet FR 2 711 827. Par rapport à la première figure de la présente demande, les éléments référencés par deux nombres dont les unités sont identiques ont une fonction analogue. Cette convention s'applique à l'ensemble des figures.

Le stator 20 est réalisé par un empilement de tôles ferromagnétiques 21, en un seul tenant. L'empilement de tôles ferromagnétiques 21 comprend une série d'évidements 22, analogues aux évidements 12 de la figure 1, répartis avec un espacement angulaire régulier. Cet empilement a une forme annulaire limitée extérieurement par une surface extérieure 100 par exemple un premier cylindre de révolution et limitée intérieurement par une surface intérieure 200 par exemple un deuxième cylindre de révolution ayant un rayon inférieur à celui du premier. Comme dans cette figure 1, deux évidements consécutifs délimitent une dent 23, et les isthmes 24a, 24b de raccordement intérieur des dents sont aussi étroits que possible.

Chaque évidement 22 est relié à l'extérieur par un canal 25. La longueur du canal 25 délimite sensiblement l'extension de tôle ferromagnétique jouant le rôle de culasse 15 dans la figure 1. Par contre, le canal 25 nécessite d'être à son tour comblé pour jouer un tel rôle.

A cet effet, des barrettes ferromagnétiques complémentaires 26 ou 27 sont prévues pour être insérées dans chaque canal 25. Comme le stator 20, la barrette ferromagnétique 26 ou 27 s'étend dans le plan perpendiculaire à la figure, et présente une section sensiblement égale à celle du canal 25. Elle est insérée en force dans le canal, une fois le bobinage réalisé, dans la direction longitudinale (c'est-à-dire axiale) du stator indiquée par une flèche pleine courbée. Un inconvénient de l'insertion longitudinale est que la partie de stator servant de point d'entrée à l'insertion subit toutes les variations dimensionnelles résultant des irrégularités de la barrette et/ou du processus de chassage nécessaire à l'insertion. Il en résulte que, sur un même axe longitudinal, les canaux 25 des tôles proches du point de début d'insertion sont beaucoup plus élargis que les canaux 25 des tôles éloignées du point de début d'insertion, ce qui provoque des entrefers parasites sur les premiers.

A cet effet s'ajoute que le stator est réalisé sous forme d'un empilement de tôles stator qui ne sont pas strictement identiques géométriquement et qu'il existe donc des décalages non nuls de diamètre et de position entre les canaux 25 de tôles consécutives.

La figure 3 décrit un mode de réalisation d'un stator 30 selon l'invention. Le stator est un stator de machine électrique tubulaire comprenant une carcasse ferromagnétique réalisée d'un seul tenant, ayant une forme annulaire délimitée notamment par une surface intérieure 200 et une surface extérieure 100. Comme dans le brevet US 5,705,874 les évidements 32a, 32b dans la tôle ferromagnétique 31 sont regroupés par paires, de manière à ce qu'un seul canal 35 permette de remplir deux évidements. Les dents présentent des sections légèrement différentes entre une dent centrale 33a (partagée par deux évidements utilisant le même canal) et les dents latérales 33b à la paire d'évidements. Comme dans les figures précédentes, une dent est intérieurement raccordée à ses voisines par des isthmes 34a, 34b aussi étroits que possibles.

Le canal 35 est comblé après bobinage par une première cale ferromagnétique de type agrafe 36 ayant une section en C ou par une deuxième cale ferromagnétique de type agrafe 37. Une cale de type agrafe recouvre non seulement l'entrée du canal 35, mais aussi ses deux divisions latérales 35a et 35b servant d'entrée à chaque évidement.

La première cale 36 est représentée avant insertion radiale, symbolisée par la flèche pleine, tandis que la deuxième cale 37 est également représentée en position finale.

Sur la première cale 36, on a référencé deux protubérances 36a et 36b de part et d'autre d'un creux 36c. La première protubérance 36a est destinée à fermer la première division latérale 35a, tandis que la deuxième protubérance 36b est destinée à obstruer la deuxième division latérale 35b. Le creux 36c laisse un espace permettant à la partie extérieure 33c de la dent centrale 33a de s'engager dans la cale.

Les cales peuvent être réalisées à partir de matériau massif, mais préférentiellement à partir de matériau ferromagnétique en grains, comme dans la première cale 36, ou feuilleté, comme dans la deuxième cale 37.

La disposition des cales en forme d'agrafe permet de minimiser les entrefers en offrant une plus grande surface de contact entre la cale et la tôle stator. De plus, l'insertion de la cale est effectuée de manière radiale, ce qui évite les entrefers résiduels provenant d'une insertion longitudinale, comme expliqué plus haut, la déformation locale ne correspondant qu'au juste nécessaire.

De manière préférée, la cale est réalisée en matériau feuilleté, en particulier sous forme d'un empilement de tôles de cale, de même disposition et de même épaisseur que les tôles stator, et cet empilement est réalisé de manière à tolérer un léger glissement d'une tôle de cale par rapport à ses voisines, selon son plan principal. Dans ce cas, le processus d'insertion radiale (représenté par une flèche pleine au dessus de la cale 37, permet à chaque tôle de cale de trouver au mieux sa place dans chaque canal 35 de chaque tôle stator.

Dans ce cas, une insertion en force par chassage est préférée, et deux cales diamétralement opposées sont chassées simultanément. Alternativement, toutes les cales sont chassées simultanément.

Avantageusement, l'isolation électrique participe à la qualité du processus de bobinage en assurant une fonction anti-retour du fil conducteur, comme représenté par une feuille isolante 38 fermant partiellement l'entrée de l'évidement.

Alternativement, comme dans le brevet US 5,705,874 l'isolation est réalisée par surmoulage isolant 39a, déposé sur l'ensemble des tôles assemblées en paquet. A ce surmoulage isolant est associé un clapet isolant 39b facilitant l'emprisonnement du fil conducteur dans l'évidement.

Préférentiellement, le clapet isolant est flexible et il ferme l'évidement lorsqu'il est au repos. Alternativement, le clapet isolant est constitué par un simple relief de matière isolante favorisant la rétention du fil, par exemple en forme de bec.

La deuxième cale présente elle-même deux surmoulages isolants, 37d et 37e, disposés sur les protubérances (37a et 37b, non référencées). Quand la cale est réalisée par empilage de tôles de cales collées les unes aux autres, le surmoulage isolant est avantageusement réalisé avec un film de colle.

La figure 4A représente en coupe une première variante du mode de réalisation d'un stator selon l'invention. Pour simplifier la vue, la courbure du stator est nulle sur la figure.

La dent 43 présente un premier prolongement 43a et un deuxième prolongement 43b, de manière à augmenter la surface de contact entre la dent et la cale 46. De plus, la cale présente cette fois une première protubérance 46a moins large (par exemple deux fois moins large) que la deuxième protubérance 46b. De la même façon, la première division latérale 45a (masquée par la cale) est moins large que la deuxième division latérale 45b (masquée par la cale). La cale s'étend donc entre les repères L1 et L2.

Si une deuxième tôle stator située sous la première tôle stator est retournée, alors, pour cette deuxième tôle stator, la première division latérale est cette fois plus large que la deuxième divison latérale. Il suffit d'inverser le sens de montage de la deuxième tôle de cale avant insertion. Cette deuxième tôle de cale s'étend alors entre les repères L3 et L4. On a représenté en trait pointillé la trace de la deuxième tôle de cale.

La figure 4B représente en vue partielle de côté la première variante du mode de réalisation d'un stator selon l'invention. Sur la partie gauche de la figure, la cale n'est pas insérée et on voit le sommet de la dent 43. Sur la partie centrale, une première cale 46 en matériau fritté est insérée. Sur la partie droite, une deuxième cale 47 réalisée par assemblage de tôles est insérée.

Le stator est réalisé par empilage de tôles stator 41, identiques à la tôle de la figure 4A. Un premier nombre N1 de tôles est assemblé selon une même disposition, puis les tôles sont retournées et un deuxième nombre N2 de tôles est assemblé selon la nouvelle disposition. Il en résulte un aspect crénelé du canal 45 (non référencé) et de ses divisions latérales 45a et 45b. Les créneaux ont respectivement une première hauteur D1 et une deuxième hauteur D2, avec D1 = N1 x e, et D2 = N2 x e, où e est l'épaisseur d'une tôle stator. On a N1 = N2 sur la figure 4B.

On peut prendre N1 = N2 = 1 pour optimiser le transfert de flux magnétique, mais une telle valeur conduit à augmenter l'effort de chassage. Des empilages consécutifs de 5 à 10 tôles suffisent à minimiser convenablement les entrefers.

La figure 5 décrit une deuxième variante de réalisation de stator selon l'invention. Un canal 55 présente, vers l'extérieur, une ouverture angulaire A1. Une cale 56 présente une face interne plane, une face externe dont le rayon de courbure est égal au rayon de courbure externe des tôles stator, et deux faces latérales dont l'angle A2 est égal à l'ouverture angulaire A1. Comme précédemment, un creux est ménagé dans la cale de manière à pouvoir s'emboîter dans la dent correspondante.

Préférentiellement, la cale n'est pas insérée dans le canal en exerçant un effort de chassage important, mais simplement positionnée au contact des tôles stator, l'effort d'insertion ne concernant que l'emboîtement de la dent dans le creux. Le profil conique de la cale permet un ajustement facile. Une fois cet ajustement réalisé, la cale est maintenue en place par sertissage latéral, par poinçonnage ou par cordon de soudure laser.

Il en est de même pour l'ensemble des cales, complétant ainsi les tôles stator pour former un volume cylindrique. Le stator 50 est alors inséré axialement dans un tube cylindrique 500, par exemple réalisé en matière plastique. Si les cales ne sont pas maintenues par l'un des procédés ci-dessus, ce tube exerce sur l'ensemble une pression mécanique suffisante pour garantir l'adaptation dimensionnelle par déformation élastique entre cales et tôles stator, permettant de réduire les entrefers au minimum.

La figure 6 décrit une troisième variante de réalisation, dans laquelle la section d'une cale 66 présente un profil biconvexe. La surface interne de la cale s'adapte parfaitement à la surface du canal 65 ouverte vers l'extérieur. Comme précédemment, un creux est ménagé dans la cale de manière à pouvoir s'emboîter dans la dent correspondante. De nouveau, les cales sont maintenues en place par sertissage latéral, par poinçonnage ou par cordon de soudure laser, ou encore sont simplement positionnées au contact des tôles stator, et ce n'est qu'après chassage axial dans un tube 600, par exemple en matière plastique, que l'ensemble du stator acquiert sa cohérence mécanique.

Un avantage de ce mode de réalisation est de donner une plus grande dimension aux cales. Celles-ci peuvent être de nouveau constituées de tôles agrafées, comme les tôles stator.

Dans ces deux modes de réalisation, il est préférable que le tube contribue à maintenir les cales serrées contre la carcasse après le chassage. Le tube doit donc présenter des caractéristiques élastiques aptes à effectuer ce serrage et compenser d'éventuelles variations dimensionnelles dues au vieillissement ou aux changements de température.

Dans tous les modes de réalisation, non seulement le serrage garantit une réduction des entrefers parasites, mais il évite de plus des vibrations parasites de la cale.

L'invention a été décrite dans le cas de carcasses de stators réalisées par empilement de tôles ferromagnétiques. Elle s'applique de même au cas de carcasses de stators monoblocs réalisées par frittage.

Un avantage supplémentaire de l'invention est que le paquet de tôles stator n'a pas nécessairement besoin d'être soudé ou agrafé : le vernis, ou un collage léger, suffit à maintenir assemblées les tôles stator les unes avec les autres, sous forme d'une carcasse réalisée d'un seul tenant, pendant le bobinage. Puis les cales renforcent la cohésion mécanique et la rigidité du stator pour les manipulations ultérieures et/ou son transport avant insertion dans un tube.

La cohésion mécanique de l'ensemble est renforcée par l'effet d'agrafage de la cale sur le paquet de tôles stator.

Inversement, le chassage d'une cale non rigide (par exemple réalisée par empilement de tôles de cale) sur un paquet de tôles stator rigidifié (par agrafage des tôles stator, par cordon de soudure, ou par collage fort) permet de rigidifier les constituants de ladite cale.

Un procédé de fabrication d'un stator selon l'invention comporte une première étape d'insertion radiale de cales ferromagnétiques dans un paquet de tôles stator, après bobinage extérieur de celui-ci, une partie centrale de chaque dent stator venant s'emboîter dans une partie centrale de chaque cale.

Le procédé comporte une deuxième étape de fixation de chaque cale au moyen d'un sertissage et/ou d'un poinçonnage et/ou d'un cordon de soudure.

La première étape du procédé est représentée sur les figures 3, 5 et 6 par des flèches droites pleines. La deuxième étape du procédé est représentée sur les figures 5 et 6 par des flèches droites simples.

## Revendications

1. Stator (30 ; 40 ; 50 ; 60) de machine électrique comprenant une carcasse délimitée notamment par une surface intérieure (200) et une surface extérieure (100), la carcasse étant munie d'évidements longitudinaux (32a, 32b) destinés à recevoir des bobinages tels que chaque spire de bobinage est logée dans des évidements non consécutifs et munie de canaux longitudinaux (35 ; 45 ; 55) débouchant dans deux évidements et au niveau de la surface extérieure, **caractérisé en ce que** le stator comprend des éléments complémentaires ferromagnétiques indépendants (36 ; 37 ; 46 ; 47 ; 56 ; 66) rapportés sur la carcasse et obturant les canaux longitudinaux et **en ce que** les éléments complémentaires ferromagnétiques entourent au moins partiellement les extrémités des dents (33c ; 43) séparant deux évidements longitudinaux dans lesquels débouche un même canal longitudinal.

2. Stator selon la revendication 1, **caractérisé en ce que** les éléments complémentaires ferromagnétiques ont une section en forme de C.

3. Stator selon la revendication 1 ou 2, **caractérisé en ce que** les dents séparant deux évidements longitudinaux dans lesquels débouche un même canal longitudinal ont des extrémités élargies (43a ; 43b).

4. Stator selon l'une des revendications précédentes, **caractérisé en ce que** les éléments complémentaires ferromagnétiques sont maintenus par un tube (500 ; 600) entourant la carcasse.

5. Stator selon l'une des revendications précédentes, **caractérisé en ce que** des parois de canaux (45a, 45b) présentent de premières surfaces crénelées et **en ce que** des parois d'éléments complémentaires ferromagnétiques (46 ; 47) présentent des deuxièmes surfaces crénelées, les premières et deuxièmes surfaces crénelées étant complémentaires.

6. Stator selon l'une des revendications précédentes, **caractérisé en ce que** les éléments complémentaires ferromagnétiques sont monoblocs.

7. Stator selon l'une des revendications 1 à 5, **caractérisé en ce que** les éléments complémentaires ferromagnétiques sont réalisés par empilage de tôles.

8. Procédé de fabrication d'un stator (30 ; 40 ; 50 ; 60) de machine électrique, notamment d'un stator selon l'une des revendications précédentes, comprenant les étapes suivantes :
- fournir une carcasse délimitée notamment par une surface intérieure (200) et une surface extérieure (100) munie d'évidements longitudinaux (32a, 32b) destinés à recevoir des bobinages tels que chaque spire de bobinage est logée dans des évidements non consécutifs et munie de canaux longitudinaux (35 ; 45 ; 55) débouchant dans deux évidements et au niveau de la surface extérieure,
- réaliser des bobinages dans les évidements, tels que chaque spire est logée dans des évidements non consécutifs,
- rapporter, par insertion radiale, des éléments complémentaires ferromagnétiques indépendants (36 ; 37 ; 46 ; 47 ; 56 ; 66) sur la carcasse, ces éléments complémentaires ferromagnétiques obturant les canaux longitudinaux et entourant au moins partiellement les extrémités des dents (33c ; 43) séparant deux évidements longitudinaux dans lesquels débouche un même canal longitudinal.

## Claims

1. Stator (30; 40; 50; 60) of an electric machine, including a frame delimited in particular by an inner surface (200) and an outer surface (100), the frame being equipped with longitudinal recesses (32a, 32b) provided for receiving coils in such a manner that each coil winding is inserted in non-successive recesses, and including longitudinal channels (35; 45; 55) each opening into two recesses and into the outer surface, **characterised in that** the stator comprises independent complementary ferromagnetic elements (36; 37; 46; 47; 56; 66) positioned on the frame and closing the longitudinal channels, and **in that** the complementary ferromagnetic elements surround at least in part the ends of the teeth (33c; 43) that separate two longitudinal recesses which open into the same longitudinal channel.

2. Stator according to claim 1, **characterised in that** the complementary ferromagnetic elements have a sectional C shape.

3. Stator according to claim 1 or 2, **characterised in that** the teeth that separate two longitudinal recesses opening into the same longitudinal channel, have enlarged end portions (43a; 43b).

4. Stator according to one of the preceding claims, **characterised in that** the complementary ferromagnetic elements are retained by a tube (500; 600) surrounding the frame.

5. Stator according to one of the preceding claims, **characterised in that** the walls of the channels (45a, 45b) include first serrated surfaces, and **in that** the walls of complementary ferromagnetic elements (46; 47) include second serrated surfaces, the first and second serrated surfaces being complementary ones.

6. Stator according to one of the preceding claims, **characterised in that** the complementary ferromagnetic elements are single-piece.

7. Stator according to one of claims 1 to 5, **characterised in that** the complementary ferromagnetic elements are made of stacked metal sheets.

8. Method for manufacturing a stator (30; 40; 50; 60) of an electric machine, especially a stator according to one of the preceding claims, including the following steps:
- providing a frame that is delimited in particular by an inner surface (200) and an outer surface (100) equipped with longitudinal recesses (32a, 32b) provided for receiving coils in such a manner that each coil winding is inserted in non-successive recesses, and including longitudinal channels (35; 45; 55) each opening into two recesses and into the outer surface,
- providing coils in the recesses in such a manner that each winding of the coils is placed in non-successive recesses,
- introducing by radial insertion, complementary ferromagnetic elements (36; 37; 46; 47; 56; 66) into the frame, these complementary ferromagnetic elements closing the longitudinal channels and surrounding, at least in part, the end portions of the teeth (33c; 43) which separate two longitudinal recesses opening into the same longitudinal channel.

## Patentansprüche

1. Stator (30; 40; 50; 60) einer elektrischen Maschine, mit einem Gehäuse, welches insbesondere von einer Innenfläche (200) und einer Aussenfläche (100) begrenzt wird, wobei das Gehäuse mit längsgerichteten Ausnehmungen (32a, 32b) versehen ist, die zur Aufnahme von Wicklungen derart bestimmt sind, dass die einzelnen Windungen der Wicklungen jeweils in nicht aufeinanderfolgenden Ausnehmungen untergebracht sind, sowie mit Längskanälen (35; 45; 55) ausgestattet ist, welche in je zwei Ausnehmungen und in der Aussenfläche münden, **dadurch gekennzeichnet, dass** der Stator unabhängige komplementäre ferromagnetische Elemente (36; 37; 46; 47; 56; 66) aufweist, die in das Gehäuse eingelegt sind und die Längskanäle verschliessen, und dass die komplementären ferromagnetischen Elemente mindestens zum Teil die Enden der Zähne (33c; 43) umschliessen, welche zwischen je zwei längsgerichteten Ausnehmungen liegen, in die der gleiche Längskanal mündet.

2. Stator nach Anspruch 1, **dadurch gekennzeichnet, dass** die komplementären ferromagnetischen Elemente einen Querschnitt in Form eines C aufweisen.

3. Stator nach Anspruch 1 oder 2, **dadurch gekennzeichnet, dass** die Zähne, welche zwei längsgerichte Ausnehmungen voneinander trennen und in denen der gleiche Längskanal mündet, erweiterte Endbereiche (43a; 43b) aufweisen.

4. Stator nach einem der vorstehenden Ansprüche, **dadurch gekennzeichnet, dass** die komplementären ferromagnetischen Elemente von einem Rohr (500; 600) gehalten werden, welches das Gehäuse umgibt.

5. Stator nach einem der vorstehenden Ansprüche, **dadurch gekennzeichnet, dass** die Wandungen der Kanäle (45a, 45b) erste gerippte Flächen besitzen, und dass die Wandungen von komplementären ferromagnetischen Elementen (46; 47) zweite gerippte Flächen aufweisen, wobei die ersten und die zweiten gerippten Flächen einander komplementär sind.

6. Stator nach einem der vorstehenden Ansprüche, **dadurch gekennzeichnet, dass** die komplementären ferromagnetischen Elemente als Blockelemente ausgeführt sind.

7. Stator nach einem der Ansprüche 1 bis 5,**dadurch gekennzeichnet, dass** die komplementären ferromagnetischen Elemente als Blechstapel ausgeführt sind.

8. Verfahren zur Herstellung eines Stators (30; 40; 50; 60) einer elektrischen Maschine, insbesondere eines Stators nach einem der vorstehenden Ansprüche, mit den folgenden Verfahrensschritten:
- Bereitstellung eines Gehäuses, welches insbesondere von einer Innenfläche (200) und einer Aussenfläche (100) begrenzt wird und mit längsgerichteten Ausnehmungen (32a, 32b) versehen ist, die dazu bestimmt sind, Wicklungen derart aufzunehmen, dass jede Windung der Wicklung in nicht aufeinanderfolgenden Ausnehmungen angebracht ist, und das mit Längskanälen (35; 45; 55) versehen ist, die jeweils in zwei Ausnehmungen sowie in der Aussenfläche münden,
- Anbringen der Wicklungen in den Ausnehmungen, derart, dass die einzelnen Windungen der Wicklungen in nicht aufeinanderfolgenden Ausnehmungen angebracht sind,
- Anbringen von unabhängigen komplementären ferromagnetischen Elementen (36; 37; 46; 47; 56; 66) auf dem Gehäuse durch radiales Einsetzen, wobei diese komplementären ferromagnetischen Elemente die Längskanäle abdecken und mindestens teilweise die Enden der Zähne (33c; 43) umgeben, welche zwei längsgerichtete Ausnehmungen voneinander trennen, in denen der gleiche Längskanal mündet.
